# EUROPEAN PATENT APPLICATION

(11) **EP 3 067 266 A1**
(43) Date of publication of application: **14.09.2016**
(21) Application number: 15159056.9
(22) Date of filing: 13.03.2015
(51) Int. Cl.: B63B 1/08, B63B 3/38, B63H 23/30, B63H 21/20

(54) **ENGINE ROOM ARRANGEMENT FOR A MARINE VESSEL**

(71) Applicant: Caterpillar Propulsion Production AB, 475 22 Öckerö (SE)
(72) Inventor: HANSSON, Mattias, 475 22 Öckerö (SE); MOVING, Björn, 2970 Horsholm (DK)
(74) Representative: Kramer Barske Schmidtchen Patentanwälte PartG mbB

(57) **Abstract**

An engine room arrangement (10) for a marine vessel (100) comprises a fin (12) formed at a rear portion of a hull (14) of the vessel (100). The fin (12) projects downward from the hull (14) and protects a propeller (24) of the vessel (100). A gear box (16) is arranged at least in part in the fin (12) and transmits a rotation of a propulsion shaft (18) coupled to a main engine (20) to a propeller shaft (22) drivably coupled to the propeller (24). The fin (12) provides extra buoyancy for the vessel (100). The propeller shaft (22) is formed as a relatively short shaft, while the propulsion shaft (18) is formed as a high speed/low torque shaft having a smaller diameter.

## Description

### Technical Field

The present disclosure relates to marine vessels, in particular, to an engine room arrangement for a marine vessel.

### Background

A marine vessel such as, for example, an offshore support vessel includes one or more combustion engines driving one or more main propellers for propulsion of the vessel. The one or more main propellers are mechanically coupled to the one or more engines, for example, via one or more drive shafts. The one or more engines rotate at a given speed, resulting in a corresponding rotation of the one or more main propellers. For example, the vessel may include a pair of diesel engines drivably coupled to a pair of main propellers. The diesel engines and the main propellers are generally operating at constant speed.

For transmitting a power output of the engines to the main propellers, a gear box may be arranged between a propulsion shaft coupled to the engine and a propeller shaft coupled to an associated propeller. The gear box is configured as a speed change mechanism that changes the speed of the propulsion shaft to a speed of the propeller shaft that is suitable for rotating the propeller.

The present disclosure is directed, at least in part, to improving or overcoming one or more aspects of prior systems.

### Summary of the Disclosure

In one aspect of the present disclosure, an engine room arrangement for a marine vessel comprises a fin formed on a rear portion of a hull of the vessel. The fin projects downward from the hull, and a gear box is arranged at least in part inside the fin. A propulsion shaft is drivably coupled to the gear box and extends from the gear box to a front of the vessel and inside the vessel. The propulsion shaft is configured to be connected to a main engine of the vessel. A propeller shaft is drivably coupled to the gear box and extends rearward from the gear box to a propeller of the vessel.

In another aspect of the present disclosure, a marine vessel comprises a main engine and the engine room arrangement of the above aspect, wherein the propulsion shaft of the engine room arrangement is connected to the main engine to be rotated by the same.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a partial side sectional view of a marine vessel including an engine room arrangement in accordance with the present disclosure; and
Fig. 2 shows a schematic plan view of the engine room arrangement of Fig. 1.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part of the realization that it may be advantageous to provide a gear box coupling a propulsion shaft extending from a main engine of a marine vessel to a propeller shaft coupled to a propeller of the marine vessel close to the propeller. This reduces a length of hydraulic conduits formed in the propeller shaft, such that the propeller shaft is easier to manufacture, because the conduits to be drilled through the propeller shaft have a shorter length.

Further, the present disclosure may be based at least in part on the realization that it is advantageous to arrange the gear box in a fin that is provided on a hull of the vessel in a rear portion of the same. In this manner, the fin can protect the propeller while at the same time providing extra buoyancy.

In addition, the present disclosure may be based on the realization that one or more of the above advantages allows for providing a larger propeller to be used for the marine vessel. Additionally, the above arrangement may allow for providing a propulsion shaft between the engine and the gear box that is relatively long but has a smaller diameter, i.e., that is configured as a high speed/low torque shaft. The engine room arrangement of the present disclosure may be particularly well suited for an arctic vessel, for example, an arctic supply vessel or the like.

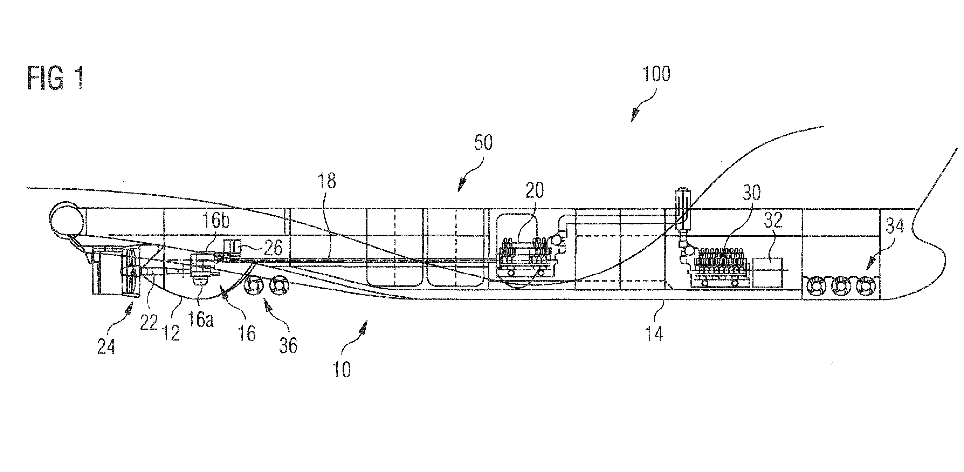

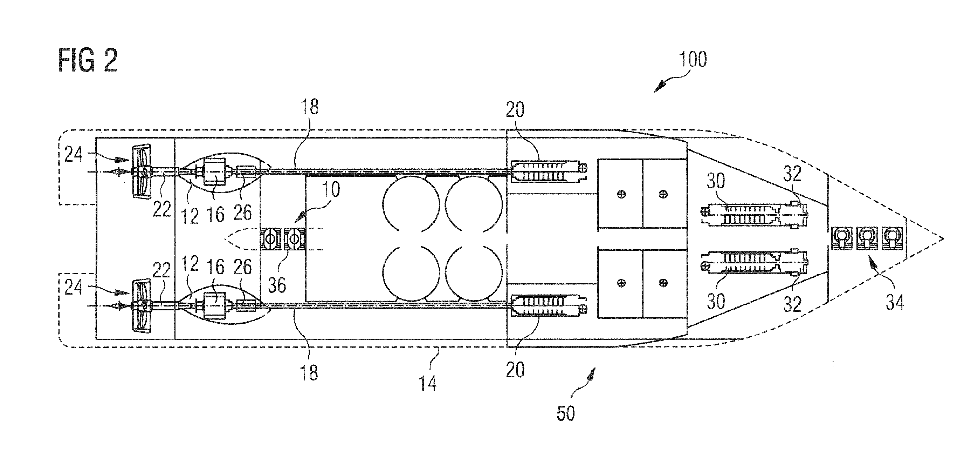

In the following, an exemplary engine room arrangement for a marine vessel is described with respect to Figs. 1 and 2. Fig. 1 shows a partial side sectional view of a marine vessel 100 having an engine room arrangement 10, and Fig. 2 shows a schematic plan view of the engine room arrangement of Fig. 1.

As shown in Fig. 1, marine vessel 100, which may be an arctic vessel, for example, an arctic supply vessel or an anchor handling tug supply vessel, comprises a hull 14.

As shown in Fig. 2, a power system 50 of marine vessel 100 includes a pair of main engines 20. Each of main engines 20 may be an internal combustion engine configured to burn a supply of gaseous and/or liquid fuel to produce a mechanical output. For example, each main engine 20 may be a diesel engine, a gaseous fuel engine or a dual fuel engine configured to burn both gaseous fuel and liquid fuel, for example, diesel oil. Alternatively, each main engine 20 may be configured as an electric motor powered by a generator. Each main engine 20 may be a variable speed engine that is configured to operate at varying speeds, or may be a constant speed engine configured to operate at a constant speed.

As also shown in Fig. 2, power system 50 of marine vessel 100 further includes a pair of propellers 24 mechanically connected to the pair of engines 20 via corresponding propulsion shafts 18 and propeller shafts 22. Propulsion shafts 18 and propeller shafts 22 are drivably coupled to each other via respective gear boxes 16. Propulsion shafts 18 may be coupled to gear boxes 16 via clutches (not shown).

As shown in Fig. 1, each gear box 16 is arranged at least in part inside a fin 12 formed in a rear portion of hull 14 of vessel 100 and projecting downward from the same. In the example shown in Fig. 1, each gear box 16 includes a first portion 16a disposed within fin 12 and drivably coupled to propeller shaft 22, and a second portion 16b disposed above first portion 16a and drivably coupled to propulsion shaft 18. In the example shown in Fig. 1, fin 12 is open to an inside of hull 14. It will be appreciated, however, that in other embodiments an inside of fin 12 may be separated from an inside of hull 14 by a partition wall or the like. Further, in some embodiments, first portion 16a may be disposed inside fin 12, while second portion 16b may be disposed outside/above fin 12.

As shown in Fig. 1, an auxiliary motor such as an electric motor 26 is drivably coupled to gear box 16 to provide auxiliary power to propeller 24. In the example shown in Fig. 1, electric motor 26 is drivably coupled to second portion 16b of gear box 16 and includes an output shaft (not shown) that extends parallel to propulsion shaft 18. Electric motor 26 is configured to provide a boost mode and/or a boost limp home mode for vessel 100. It should be appreciated that, in other embodiments, electric motor 26 may be omitted, or may be arranged at a different position, for example, not forward, but rearward of gear box 16. In some embodimens, electric motor 26 may be configured to also take out power for other electrical loads on vessel 100.

As shown in Fig. 1, each fin 12 is formed in a rear portion of hull 14 and projects downward from hull 14. In some embodiments, each fin 12 may be formed integrally with hull 14. In other embodiments, each fin 12 may be a separate member fastened to hull 14 by appropriate fastening means, for example, by being bolted or welded to hull 14. At least fin 12, gear box 16, propulsion shaft 18 and propeller shaft 22 may form the engine room arrangement of the present disclosure.

Each propeller 24 can be a fixed pitch propeller, or may, for example, be configured as a controllable pitch propeller. The pitch angle of the blades of each propeller 24 may be adjusted, for example, using a hydraulic system including a pitch control valve (not shown). A plurality of hydraulic passages may be formed in propeller shaft 22 for supplying hydraulic fluid to control a pitch of propeller 24. Propeller shafts 22 transmit the rotation of main engines 20 to propellers 24 via gear boxes 16 such that propellers 24 rotate at a speed that is proportional or equal to the speed of main engines 20. The thrust provided by propellers 24 may be adjusted by adjusting the pitch angle of the blades of propellers 24.

As shown in Figs. 1 and 2, power system 50 of marine vessel 100 may further comprise a pair of secondary engines 30, which may each be of the type described above with respect to main engines 20. A pair of alternators (i.e. generators) 32 may be mechanically connected to the pair of secondary engines 30. For example, an input of each alternator 32 may be mechanically connected to a flywheel (not shown) of one of secondary engines 30. Each alternator 32 may be configured to receive a mechanical output from the associated secondary engine 30 and convert the same to electrical power. The electrical power generated by each alternator 32 may be proved to, for example, electric motor 26, and/or an electric motor (not shown) associated with one of front tunnel thrusters 34 provided at a bow of vessel 100, which may generate a water jet resulting in a steering force which facilitates maneuvering of vessel 100. Likewise, the electric power generated by alternators 32 may be provided to an electric motor (not shown) associated with one of rear tunnel thrusters 36. In addition, electric power output by alternators 32 may be supplied to one or more electrical loads (not shown) of vessel 100. For example, the electrical loads may be heating systems, pumps, navigation and bridge systems or other auxiliary systems onboard vessel 100.

As shown in Figs. 1 and 2, each propeller shaft 22 is formed with a length that is significantly smaller than a length of the corresponding propulsion shaft 18. In addition, each propulsion shaft 18 has a diameter that is smaller than or equal to a diameter of the corresponding propeller shaft 22. For example, each propulsion shaft 18 may be a high speed/low torque shaft configured to rotate at between around 500 rpm and around 2200 rpm, and may have a length of between around 0 m and around 50 m and a diameter of between around 100 mm and around 300 mm. Each propeller shaft 22 may have a length of less than 10 m, for example, between around 2 m and around 10 m.

The arrangement of each gear box 16 relatively close to the associated propeller 24 allows for providing a large propeller having a diameter of more than 2 m, for example, between around 2 m and around 10 m. In addition, fins 12 projecting from hull 14 may provide protection for propellers 24. In addition, fins 12 may provide extra buoyancy for vessel 100.

In the example shown in Figs. 1 and 2, engine room arrangement 10 includes a pair of fins 12 spaced apart in the lateral direction of vessel 100, each fin 12 having one of gear boxes 16 arranged at least in part inside the same. It will be readily appreciated, however, that in other embodiments only a single fin 12 and, correspondingly, a single gear box 16 and a single main engine 20 may be provided. Likewise, in other embodiments, more than two fins 12, gear boxes 16 and main engines 20 may be provided.

Further, while power system 50 of marine vessel 100 shown in Figs. 1 and 2 is a hybrid power system including internal combustion main engines 20 and electric motors 26, in other embodiments, electric motors 26 may be omitted. Further, while in the embodiments shown in Figs. 1 and 2 secondary engines 30 are provided to power, for example, tunnel thrusters 34 and 36, in other embodiments, tunnel thrusters 34, 36 and, optionally, other electrical loads may be powered by main engines 20, each of which may then include alternator 32.

It will be readily appreciated that each fin 12 may have any appropriate shape that provides an inner space formed inside each fin 12 that can accommodate at least in part gear box 16 while providing extra buoyancy for vessel 100. Therefore, the present disclosure is not limited to the shape of fins 12 shown in Fig. 1 and 2.

Although marine vessel 100 has been described above as an arctic vessel, it will be readily appreciated that the engine room arrangement disclosed herein may be used in any other type of marine vessel.

### Industrial Applicability

The engine room arrangement for a marine vessel disclosed herein is applicable to marine vessels in general for improving the efficiency of the power system of the same. In particular, the engine room arrangement disclosed herein may allow for use of a larger propeller and a shorter propeller shaft connecting the propeller to the gear box disposed at least in part inside the fin formed on the hull of the vessel.

An exemplary operation of marine vessel 100 having engine room arrangement 10 will be described in the following with reference to Figs. 1 and 2.

Main engines 20 may combust a fuel such as liquid fuel and/or gaseous fuel to provide output power. The output power provided by main engines 20 rotates the pair of propulsion shafts 18 drivably coupled to main engines 20, for example, at a constant speed that is a relatively high speed.

The pair of propulsion shafts 18 rotating at the relatively high speed is drivably coupled to the pair of gear boxes 16 disposed in the pair of fins 12 formed on hull 14 of vessel 100. Due to the arrangement of fins 12 in a rear portion of hull 14 in close proximity to main propellers 24, propulsion shafts 18 may be formed as relatively long shafts having a relatively small diameter.

Gear boxes 16 change the rotation speed of propulsion shafts 18 to a different rotation speed, for example, a lower rotation speed that may be between 1/4 and 1/10 of the rotation speed of propulsion shafts 18, and transmit the same to propeller shafts 22 connected to propeller 24. For example, each gear box 16 may be configured to change the relatively high constant speed of the associated propulsion shaft 18 to a relatively low constant speed of the associated propeller shaft 22. In some embodiments, each gear box 16 may not be configured as a speed change mechanism that changes the rotation speed of the propulsion shaft 18, but may act as a propeller step in order to arrange part of the propulsion line inside fin 12.

A blade angle of propellers 24 may be a fixed pitch, or may be controlled by supplying hydraulic fluid through hydraulic conduits formed in propeller shafts 22 (not shown). Accordingly, a desired thrust provided by propellers 24 can be set, for example, in accordance with an operator command.

Although the preferred embodiments of this invention have been described herein, improvements and modifications may be incorporated without departing from the scope of the following claims.

## Claims

1. An engine room arrangement (10) for a marine vessel (100), comprising:
a fin (12) formed on a rear portion of a hull (14) of the vessel (100), the fin (12) projecting downward from the hull (14);
a gear box (16) arranged at least in part inside the fin (12);
a propulsion shaft (18) drivably coupled to the gear box (16), the propulsion shaft extending from the gear box (16) to a front of the vessel (100) and inside the vessel (100) and being configured to be connected to a main engine or main motor (20) of the vessel (100); and
a propeller shaft (22) drivably coupled to the gear box (16), the propeller shaft (22) extending rearward from the gear box (16) to a propeller (24) of the vessel (100).

2. The engine room arrangement of claim 1, wherein the fin (12) is open to an inside of the hull (14).

3. The engine room arrangement of claim 1 or 2, wherein the gear box (16) comprises a first portion (16a) connected to the propeller shaft (22), the first portion (16a) being arranged inside the fin (12), and a second portion (16b) connected to the propulsion shaft (18), the second portion (16b) being arranged at least in part inside the hull (14).

4. The engine room arrangement of any one of claims 1 to 3, further comprising an electric motor (26) drivably coupled to the gear box (16) to provide auxiliary power to the propeller (24) and, optionally, to take out power for one or more electrical loads.

5. The engine room arrangement of claim 4, wherein the electric motor (26) is arranged at least in part inside the fin (12).

6. The engine room arrangement of any one of claims 1 to 5, wherein the propeller (24) is a controllable pitch propeller, a plurality of hydraulic passages being formed in the propeller shaft (22) for supplying hydraulic fluid to control a pitch of the propeller (24).

7. The engine room arrangement of any one of claims 1 to 6, wherein the propulsion shaft (18) has a diameter that is smaller than a diameter of the propeller shaft (22).

8. The engine room arrangement of any one of claims 1 to 7, wherein the propulsion shaft (18) is a high speed/low torque shaft configured to rotate at between around 500 rpm and around 2200 rpm and has a length of between around 0 m and around 50 m and a diameter of between around 100 mm and around 300 mm.

9. The engine room arrangement of any one of claims 1 to 8, wherein the propeller shaft (22) has a length of less than 10 m, for example, between around 2 m and around 10 m.

10. The engine room arrangement of any one of claims 1 to 9, wherein the propeller (24) has a diameter of more than 2 m, for example, between around 2 m and around 10 m.

11. The engine room arrangement of any one of claims 1 to 10, wherein the fin (12) and the hull (14) are integrally formed.

12. The engine room arrangement of any one of claims 1 to 10, comprising:
a plurality of fins (12) having the same configuration and being spaced apart in a transverse direction of the vessel (100), a gear box (16) being arranged at least in part in each fin (12) and being drivably connected to corresponding ones of a plurality of propulsion shafts (18) and a plurality of propeller shafts (22).

13. A marine vessel (100), comprising:
a main engine or main motor (20); and
the engine room arrangement (10) of any one of claims 1 to 12, the propulsion shaft (18) being connected to the main engine or main motor (20) to be rotated by the same.

14. The marine vessel of claim 13, wherein the engine room arrangement (10) includes a pair of fins (12) spaced apart in the lateral direction of the vessel (100), each fin (12) having a gear box (16) arranged at least in part inside the fin (12), each gear box (16) being connected to a corresponding one of a pair of main engines (20) via a corresponding propulsion shaft (18).

15. The marine vessel of claim 13 or 14, wherein the marine vessel (100) is an arctic vessel, for example, an arctic supply vessel or an anchor handling tug supply vessel.
